# FASCICULE DE BREVET EUROPEEN

(11) **EP 1 767 413 B1**
(45) Date de publication et mention de la délivrance du brevet: **05.11.2008**
(21) Numéro de dépôt: 06300950.0
(22) Date de dépôt: 14.09.2006
(51) Int. Cl.: B60R 21/34

(54) **Dispositif de verrouillage d'un capot de vehicule automobile comprenant des moyens deformables en cas de choc pieton**
Kraftfahrzeug-Motorhaubenverriegelungsvorrichtung mit bei Fußgängeraufprall verformbaren Mitteln
Bonnet locking device for a vehicle comprising means deformable in the event of pedestrian impact

(30) Priorité: 23.09.2005 FR 0552829
(43) Date de publication de la demande: 28.03.2007
(73) Titulaire: PEUGEOT CITROËN AUTOMOBILES S.A., 78140 Vélizy Villacoublay (FR)
(72) Inventeur: Virgoulay, Christophe, Vichy 03200 (FR); Patout, Patricia, Arcey 25750 (FR)
(74) Mandataire: Allain, Laurent

(56) Documents cités:
- EP-A- 1 557 340
- DE-A1- 10 141 628
- DE-A1- 10 308 371
- DE-A1- 10 351 044
- FR-A- 2 836 879

## Description

La présente invention concerne les véhicules automobiles, et en particulier le domaine de la sécurité passive en cas de choc piéton.

On connaît via le document FR 2836879 un véhicule comportant une structure fixe et un capot articulé par un bord arrière à cette structure fixe. La serrure c'est à dire le dispositif de verrouillage « pêne/gâche » du capot sur la structure fixe de ce véhicule est adaptée pour limiter les dommages corporels en cas de choc avec un piéton, notamment au niveau du fémur. On sait en effet que la serrure constitue un point dur particulièrement agressif sous le capot. Le pêne solidaire de la structure fixe s'engage dans une gâche solidaire du capot, cette dernière étant reliée au capot par des moyens déformables en cas de choc sur la partie centrale du capot, de sorte que l'énergie du choc se trouve dissipée par la déformation de ces moyens.

Un inconvénient de ce dispositif de verrouillage connu réside dans le fait que les moyens déformables sont montés sur la face intérieure du capot, hors il n'est pas souhaitable de charger et d'encombrer l'élément mobile que constitue le capot.

En outre, cette disposition limite la déformation possible des moyens en présence et donc la course d'absorption du choc. Or les nouvelles réglementations de choc piéton imposent une course importante entre le capot et la structure fixe sous capot.

Enfin, un tel dispositif de verrouillage connu présente une tenue mécanique vis à vis du critère d'endurance (succession de déverrouillages, d'ouvertures et de lâchers du capot) qui peut encore être améliorée, sachant que la direction d'effort est alors essentiellement verticale, tandis qu'elle est inclinée environ à 45° par rapport à la verticale dans le cas du choc piéton.

Le but de la présente invention de pallier ces inconvénients.

A cette fin, l'invention concerne un dispositif de verrouillage d'un capot en position fermée, le capot étant articulé par un bord arrière à la structure fixe d'un véhicule automobile, comprenant un pêne monté à rotation sur la structure fixe, des organes fonctionnels associés au pêne, et une gâche rigidement liée au capot dans laquelle s'engage sélectivement le pêne, caractérisé en ce que le dispositif de verrouillage comprend au moins un châssis rigidement lié à la structure fixe, apte à se déformer en cas de choc sur l'avant du capot, de manière permettre le déplacement du pêne et ses organes fonctionnels associés vers l'arrière du véhicule et/ou vers le bas.

Selon d'autres caractéristiques avantageuses :
- le châssis est formé d'au moins une pièce de tôle, rigidement lié à une traverse avant de la structure fixe du véhicule,
- le châssis prend appui sur un flan supérieur de la traverse,
- le châssis prend appui sur un flan frontal de la traverse par rapport au sens de déplacement du véhicule,
- le châssis vu de profil comprend une première portion de tôle s'élevant depuis le flan frontal au dessus du niveau du flan supérieur, raccordée par superposition à une seconde portion de tôle formant un premier coude vers l'arrière du véhicule et se prolongeant au dessus du flan supérieur, cette seconde portion formant un deuxième coude vers le bas jusqu'à rejoindre le flan supérieur et un troisième coude vers l'arrière du véhicule, de manière que la seconde portion épouse une partie dudit flan supérieur,
- le pêne et ses organes fonctionnels associés sont accolés au châssis, dans la zone de superposition des première et seconde portions de tôle, leur fixation étant assurée par au moins deux ensembles vis écrous éventuellement sertis, traversant les première et seconde portions de tôle,
- la zone de jonction entre le flan frontal et le flan supérieur est située en retrait vers l'arrière du véhicule, par rapport à la zone de superposition des première et seconde portions de tôle,
- le flan frontal comporte une portion de surface inclinée par rapport au plan YZ d'un angle α,
- l'angle α est compris entre 5 et 45°.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une représentation schématique de l'avant d'un véhicule automobile selon l'invention, vu de côté,
- les figures 2 et 3 sont des vues en perspective du dispositif de verrouillage de la figure 1, dans lesquelles la gâche et le capot sont schématiquement représentés,
- les figures 4 et 5 sont des vues schématiques du support du dispositif de verrouillage de la figure 1, sans la gâche, respectivement avant et après déformation due à un choc.

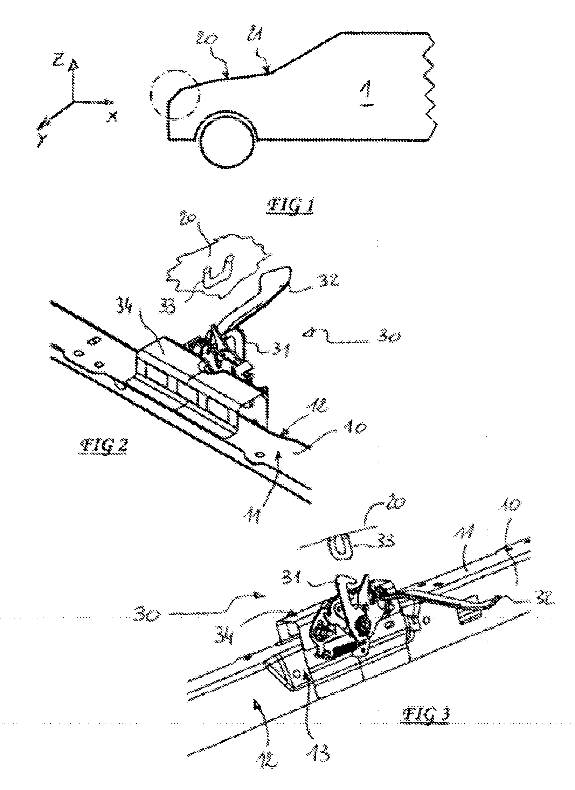

En référence aux figures 1 à 3, le véhicule automobile 1 comprend, de manière connue, une structure fixe 10, un capot 20 articulé par un bord arrière 21 à cette structure fixe 10, et au moins un dispositif de verrouillage 30 du capot 20 en position fermée.

La structure fixe 10 comprend toutes les pièces de structure du véhicule 1 normalement non mobiles et tout élément rigidement fixé à ces pièces de structure, en particulier une traverse avant 11, située derrière le pare-chocs du véhicule1.

Le dispositif de verrouillage 30 comprend un pêne 31 monté à rotation sur la structure fixe 10 du véhicule 1 et plus particulièrement sur la traverse avant 11. Ce pêne 31 peut être commandé via une palette 32 accessible à un utilisateur, au travers d'une ouverture ménagée à l'avant du véhicule, par exemple dans une grille d'entrée d'air (non représentée). Pour assurer son fonctionnement, des organes fonctionnels sont associés au pêne 31, par exemple des moyens de support assurant sa fixation à la structure fixe 10, un ou plusieurs axes de rotation et des moyens de rappels, le tout étant commandé par ladite palette 32 pour faire pivoter le pêne (31) autour de son articulation. Pour simplifier la suite de la description, nous désignerons le pêne 31 et ses organes fonctionnels associés par le terme de « bloc 310 ».

Le dispositif de verrouillage 30 comprend également une gâche 33 ayant la forme d'un fil rigide monté sur un bord avant du capot 20. Ce fil est orienté suivant la direction longitudinale du véhicule, et délimite un espace intérieur dans lequel s'engage le pêne 31 lors du verrouillage en abaissant le capot.

Selon l'invention, le dispositif de verrouillage 30 comprend au moins un châssis 34 rigidement lié à la structure fixe et plus précisément à la traverse avant 10.

Le châssis 34 est déformable en cas de choc sur l'avant du capot 20, de manière à permettre le déplacement du bloc 310 vers l'arrière et/ou vers le bas du véhicule, tout en dissipant l'énergie du choc. Notons que c'est le déplacement de la gâche 33 lors du choc sur la partie avant du capot 20 qui entraîne celui du bloc 310.

Le châssis 34 est formé d'au moins une pièce de tôle, rigidement lié à la traverse avant 10 de la structure fixe du véhicule. Le châssis est de préférence soudé sur un flan frontal 12 et sur un flan supérieur 11 de ladite traverse 10. Nous entendons par « flan frontal » un flan de la traverse 10 tourné vers l'avant du véhicule.

Le châssis 34 est fixé sur une portion de surface sensiblement verticale du flan frontal 12 et sur une portion de surface sensiblement horizontale du flan supérieur 11.

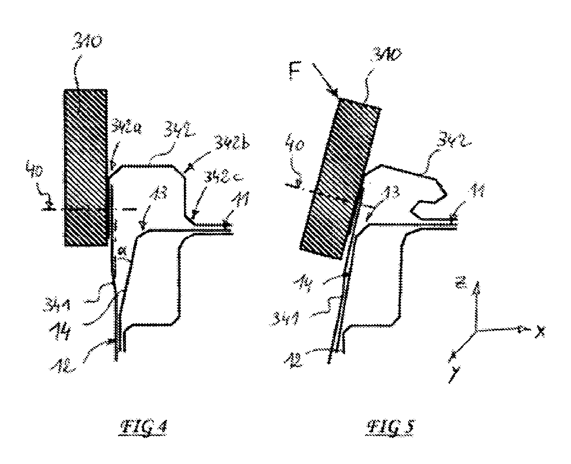

En se référant à la figure 4, le châssis 34 vu de profil comprend une première portion 341 et une seconde portion de tôle 342. La première portion 341 épouse une zone sensiblement verticale du flan frontal 12, ces éléments étant fixés ensemble par soudage. Cette première portion 341 s'élève depuis la zone sensiblement verticale du flan frontal 12, et se termine au dessus du flan supérieur 11, à une distance de l'ordre de deux centimètres de celui-ci.

Dans la partie supérieure de la première portion 341, essentiellement située au dessus du niveau du flan supérieur 11 de la traverse 10, les première 341 et seconde portion 342 de tôle sont superposées et fixées l'une à l'autre par aux moins deux ensembles vis écrous schématisés par leur axe 40 sur les figures 4 et 5. Ces moyens de fixation vis écrous assurent par la même occasion la fixation du bloc 310 sur le châssis 34 comme cela est visible sur les mêmes figures 4 et 5.

Au dessus de la zone de superposition des portions de tôle 341 et 342, la seconde portion de tôle 342 forme un premier coude 342a vers l'arrière du véhicule et se prolonge vers l'arrière au dessus du flan supérieur 11 sur une longueur de l'ordre de deux centimètres.

La seconde portion de tôle 342 forme un second coude 342b vers le bas jusqu'à rejoindre par contact le flan supérieur 11 et un troisième coude 342c vers l'arrière du véhicule. Une extrémité arrière de la seconde portion 342 épouse ainsi le flan supérieur 11 de la traverse 10, les éléments étant fixés ensemble par soudage.

On notera que la zone de fonction 13 entre le flan frontal 12 et le flan supérieur 11 de la traverse 10 est situé en retrait de la zone de superposition des portions de tôles 341, 342 superposées, dans une direction tournée vers l'arrière du véhicule. Plus précisément, le flan frontal 12 de la traverse 10 comporte, entre sa zone de jonction 13 et sa zone de fixation verticale avec la première portion de tôle 341, une portion de surface inclinée 14 par rapport au plan YZ (figures 4 et 5). L'angle α d'inclinaison est de préférence compris entre 5 et 45 degrés, par exemple de 20°. Cette portion inclinée 13 de la traverse 10 est située au dessus de la zone de fixation du châssis 34.

Comme on peut le voir aux figures 4 et 5, lorsque le bloc 310 subit un effort d'enfoncement F sous l'influence d'un choc, essentiellement vers l'arrière et/ou vers le bas du véhicule, cet effort d'enfoncement va se transmettre au châssis 34 monté sur la traverse 10 et se déformer de la manière représentée à la figure 5. Cette déformation du châssis 34 absorbe une partie de l'énergie générée par le choc.

La portion de surface inclinée 14 constitue une limite ou butée au delà de laquelle la première portion de tôle 341 ne pourra plus reculer sous l'entraînement du bloc 310. Cette limite tend à restreindre la partie du châssis 34 restant à déformer et donc à augmenter sa raideur. La portion inclinée 14 contribue ainsi au freinage du bloc 310 lors de son déplacement.

Bien entendu, l'invention n'est pas limitée aux moyens qui viennent d'être décrits et comprend tous les équivalents techniques.

## Revendications

1. Dispositif de verrouillage d'un capot (20) en position fermée, le capot étant articulé par un bord arrière (21) à la structure fixe (10) d'un véhicule automobile (1), comprenant un pêne (31) monté à rotation sur la structure fixe (10), des organes fonctionnels associés au pêne (31), et une gâche (32) rigidement liée au capot (20) dans laquelle s'engage sélectivement le pêne (31), **caractérisé en ce que** le dispositif de verrouillage (30) comprend au moins un châssis (34) rigidement lié à la structure fixe (10), apte à se déformer en cas de choc sur l'avant du capot (20), de manière permettre le déplacement du pêne (31) et ses organes fonctionnels associés vers l'arrière du véhicule et/ou vers le bas.

2. Dispositif de verrouillage selon la revendication 1, **caractérisé en ce que** le châssis (34) est formé d'au moins une pièce de tôle, rigidement lié à une traverse avant (10) de la structure fixe du véhicule (1).

3. Dispositif de verrouillage selon la revendication 2, **caractérisé en ce que** le châssis (34) prend appui sur un flan supérieur (11) de la traverse (10).

4. Dispositif de verrouillage selon la revendication 2 ou 3, **caractérisé en ce que** le châssis (34) prend appui sur un flan frontal (12) de la traverse (10) par rapport au sens de déplacement du véhicule.

5. Dispositif de verrouillage selon la revendication 4, **caractérisé en ce que** le châssis (34) vu de profil comprend une première portion (341) de tôle s'élevant depuis le flan frontal (12) au dessus du niveau du flan supérieur (11), raccordée par superposition à une seconde portion de tôle (342) formant un premier coude (342a) vers l'arrière du véhicule et se prolongeant au dessus du flan supérieur (11), cette seconde portion (342) formant un deuxième coude (342b) vers le bas jusqu'à rejoindre le flan supérieur (11) et un troisième coude (342c) vers l'arrière du véhicule, de manière que la seconde portion (342) épouse une partie dudit flan supérieur (11).

6. Dispositif de verrouillage selon la revendication 5, **caractérisé en ce que** le pêne (31) et ses organes fonctionnels associés sont accolés au châssis, dans la zone de superposition des première (341) et seconde (342) portions de tôle, leur fixation étant assurée par au moins deux ensembles vis écrous éventuellement sertis, traversant les première (341) et seconde (342) portions de tôle.

7. Dispositif de verrouillage selon l'une quelconque des revendications 3 à 6, **caractérisé en ce que** la zone de jonction (13) entre le flan frontal (12) et le flan supérieur (11) est située en retrait vers l'arrière du véhicule, par rapport à la zone de superposition des première (341) et seconde (342) portions de tôle.

8. Dispositif de verrouillage selon la revendication 7, **caractérisé en ce que** le flan frontal (12) comporte une portion de surface inclinée (14) par rapport au plan YZ d'un angle α.

9. Dispositif de verrouillage selon la revendication 8, **caractérisé en ce que** l'angle α est compris entre 5 et 45°.

## Claims

1. Device for locking a bonnet (20) in a closed position, the bonnet being articulated via a rear edge (21) to the fixed structure (10) of a motor vehicle (1), comprising a latch (31) mounted such that it can rotate on the fixed structure (10), functional members associated with the latch (31), and a striker (32) rigidly connected to the bonnet (20) with which the latch (31) selectively engages, **characterized in that** the locking device (30) comprises at least one chassis (34) rigidly connected to the fixed structure (10), able to deform in the event of an impact against the front of the bonnet (20) so as to allow the latch (31) and its associated functional members to move towards the rear of the vehicle and/or downwards.

2. Locking device according to Claim 1, **characterized in that** the chassis (34) is formed of at least one piece of sheet metal rigidly connected to a front crossmember (10) of the fixed structure of the vehicle (1).

3. Locking device according to Claim 2, **characterized in that** the chassis (34) rests against an upper panel (11) of the crossmember (10).

4. Locking device according to Claim 2 or 3, **characterized in that** the chassis (34) rests against a front panel (12) of the crossmember (10) with respect to the direction of travel of the vehicle.

5. Locking device according to Claim 4, **characterized in that** the chassis (34), when seen in profile, comprises a first sheet metal portion (341) rising up from the front panel (12) above the level of the top panel (11) and connected by superposition to a second sheet metal portion (342) forming a first bend (342a) towards the rear of the vehicle and extending above the top panel (11), this second portion (342) forming a second bend (342b) downwards until it meets the top panel (11) and a third bend (342c) towards the rear of the vehicle so that the second portion (342) hugs part of the said top panel (11).

6. Locking device according to Claim 5, **characterized in that** the latch (11) and its associated functional members are attached to the chassis in the region of superposition of the first (341) and second (342) sheet metal portions, their being attached by at least two sets of screws and nuts, possibly clinched, passing through the first (341) and second (342) sheet metal portions.

7. Locking device according to any one of Claims 3 to 6, **characterized in that** the region (13) where the front panel (12) and the top panel (11) meet is set back towards the rear of the vehicle relative to the region of superposition of the first (341) and second (342) sheet metal portions.

8. Locking device according to Claim 7, **characterized in that** the frontal panel (12) comprises a surface portion (14) that is implied by an angle α with respect to the YZ plane.

9. Locking device according to Claim 8, **characterized in that** the angle α ranges between 5 and 45°.

## Patentansprüche

1. Vorrichtung zur Verriegelung einer Motorhaube (20) in geschlossener Stellung, wobei die Motorhaube über einen hinteren Rand (21) an die feste Struktur (10) eines Kraftfahrzeugs (1) angelenkt ist, mit einem Riegel (31), der drehbar auf die feste Struktur (10) montiert ist, mit dem Riegel (31) zugeordneten Funktionsorganen und mit einem starr mit der Motorhaube (20) verbundenen Schließblech (32), in das der Riegel (31) selektiv eingreift, **dadurch gekennzeichnet, dass** die Verriegelungsvorrichtung (30) mindestens einen starr mit der festen Struktur (10) verbundenen Rahmen (34) aufweist, der fähig ist, sich im Fall eines Aufpralls auf die Vorderseite der Motorhaube (20) zu verformen, um die Verschiebung des Riegels (31) und seiner zugeordneten Funktionsorgane zur Rückseite des Fahrzeugs und/oder nach unten zu erlauben.

2. Verriegelungsvorrichtung nach Anspruch 1, **dadurch gekennzeichnet, dass** der Rahmen (34) von mindestens einem Blechteil gebildet wird, das starr mit einem vorderen Querträger (10) der festen Struktur des Fahrzeugs (1) verbunden ist.

3. Verriegelungsvorrichtung nach Anspruch 2, **dadurch gekennzeichnet, dass** der Rahmen (34) sich auf einem oberen Blech (11) des Querträgers (10) abstützt.

4. Verriegelungsvorrichtung nach Anspruch 2 oder 3, **dadurch gekennzeichnet, dass** der Rahmen (34) sich auf einem stirnseitigen Blech (12) des Querträgers (10) bezüglich der Bewegungsrichtung des Fahrzeugs abstützt.

5. Verriegelungsvorrichtung nach Anspruch 4, **dadurch gekennzeichnet, dass** der Rahmen (34) im Profil gesehen einen ersten Blechabschnitt (341) aufweist, der sich vom stirnseitigen Blech (12) über die Ebene des oberen Blechs (11) erhebt, der durch Übereinanderlegen mit einem zweiten Blechabschnitt (342) verbunden ist, welcher einen ersten Knick (342a) zur Rückseite des Fahrzeugs bildet und sich oberhalb des oberen Blechs (11) verlängert, wobei dieser zweite Abschnitt (342) einen zweiten Knick (342b) nach unten, bis er auf das obere Blech (11) trifft, und einen dritten Knick (342c) zur Rückseite des Fahrzeugs bildet, so dass der zweite Abschnitt (342) sich an einen Bereich des oberen Blechs (11) anpasst.

6. Verriegelungsvorrichtung nach Anspruch 5, **dadurch gekennzeichnet, dass** der Riegel (31) und seine zugeordneten Funktionsorgane am Rahmen in der Zone des Übereinanderliegens des ersten (341) und des zweiten Blechabschnitts (342) befestigt sind, wobei ihre Befestigung durch mindestens zwei ggf. Nietschraube-Nietmutter-Einheiten gewährleistet wird, die den ersten (341) und den zweiten (342) Blechabschnitt durchqueren.

7. Verriegelungsvorrichtung nach einem der Ansprüche 3 bis 6, **dadurch gekennzeichnet, dass** die Verbindungszone (13) zwischen dem stirnseitigen Blech (12) und dem oberen Blech (11) bezüglich der Zone des Übereinanderliegens des ersten (341) und des zweiten Blechabschnitts (342) zur Rückseite des Fahrzeugs zurückgesetzt angeordnet ist.

8. Verriegelungsvorrichtung nach Anspruch 7, **dadurch gekennzeichnet, dass** das stirnseitige Blech (12) einen bezüglich der Ebene YZ um einen Winkel α geneigten Flächenabschnitt (14) aufweist.

9. Verriegelungsvorrichtung nach Anspruch 8, **dadurch gekennzeichnet, dass** der Winkel α zwischen 5 und 45° liegt.
